# EUROPEAN PATENT APPLICATION

(11) **EP 2 403 184 A1**
(43) Date of publication of application: **04.01.2012**
(21) Application number: 10305704.8
(22) Date of filing: 29.06.2010
(51) Int. Cl.: H04L 12/24

(54) **Method and network device for using a management information base**

(71) Applicant: Alcatel Lucent, 75007 Paris (FR)
(72) Inventor: Scharre, Katrien, 9120, Melsele (BE)
(74) Representative: D'Halleweyn, Nele Veerle Trees Gertrudis

(57) **Abstract**

The invention pertains to a method for using a management information base containing management objects with a predetermined order, the method comprising receiving at a management agent a first request from the requesting entity to retrieve a next management object according to the predetermined order; sending a second request pertaining to the next management object from the management agent to a managed entity; detecting an end-of-table condition at the management agent; and sending a first end-of-table message from the management agent to said requesting entity. The invention also pertains to a network device adapted to operate according to the method.

## Description

### Field of Invention

The present invention relates to a method and network device for retrieving data from a management information base (MIB).

### Background

To facilitate the management of network devices, a management information base (MIB) is defined as a virtual database storing attributes and properties of the device under standardized, pre-defined names. Objects stored in the MIB can be retrieved by a manager by sending the appropriate "get" command to a management agent that has access to the MIB, i.e. to the hardware and software components to which the attributes and properties actually pertain. Where the managed devices are TCP/IP-based devices, the management agents implement a version of the Simple Network Management Protocol (SNMP) protocol, which allows the managers to exchange commands and data with the agents in a simple and standardized way.

### Summary

A "get" request may identify the target object directly, by including a unique identifier that is relevant in the context in which the management agent operates, or indirectly, by requesting the next object in reference to a certain identified object. The latter type of "get" request, hereinafter referred to as a "get-next" request, is typically used to successively access a number of MIB objects in a standardized order, hereinafter referred to as the lexicographic order.

Whereas MIB objects may be stored in the form of scalars or in the form of tables, a sequence of "get-next" requests is typically used to successively access all the objects of a table. The end of the table is detected by comparing the identifier of the returned object with the identifier of the requested object; a different identifier indicates that the returned object does not belong to the same table as the previous one.

The above approach has the disadvantage that the end of the table is only detected after an object not belonging to the table of interest has been returned by the management agent. As different objects in a MIB may in fact belong to very different components of the managed device, there may be a substantial latency involved in switching from one component to another in order to retrieve the lexicographic successor of an object. Accordingly, the manager experiences the disadvantage of having to wait for the table retrieval operation to complete, and of receiving an object it is not interested in.

Thus, according to a first aspect of the present invention, there is provided a method for using a management information base containing management objects with a predetermined order, the method comprising receiving at a management agent a first request from said requesting entity to retrieve a next management object according to said predetermined order; sending a second request pertaining to said next management object from said management agent to a managed entity; detecting an end-of-table condition at said management agent; and sending a first end-of-table message from said management agent to said requesting entity.

The present invention is based on the insight that the management agent, interfacing more directly with the variables representing the virtual MIB objects, has the necessary information to detect the end of a table without retrieving the next MIB object in lexicographic order. In the present invention, the manager is advantageously informed of this detection by means of a dedicated signal, thus avoiding the transmission of an unnecessary object.

In an embodiment of the method of the present invention, the detecting of the end-of-table condition comprises receiving a second end-of-table message from the managed entity.

In an embodiment of the method of the present invention, the requesting entity is an SNMP entity, said first request is a GetNextRequest-PDU, and said first end-of-table message is a modified GetResponse-PDU.

It is an advantage of this embodiment that the invention may be applied by applying minimal changes to a standardized protocol.

In an embodiment of the method of the present invention, wherein said managed entity is comprised in an access node.

As access nodes typically have different subsystems, the probability of having to switch between subsystems when retrieving consecutive MIB objects in lexicographic order is relatively high, making the application of the invention particularly advantageous.

In an embodiment of the method of the present invention, said management entity interfaces with a user via a user interface. In a particular embodiment, the user interface comprises a graphical MIB browser. In another particular embodiment, the user interface comprises a command line interface.

According to another aspect of the present invention, there is provided a network device comprising a management agent and at least one managed entity operatively connected to said management agent, the network device being in communication with a requesting entity, wherein the management agent is adapted to receive a first request from the requesting entity to retrieve a next management object relative to a reference object pertaining to said managed entity and to detect an end-of-table condition with respect to said reference object, and wherein the management agent is further adapted to send an end-of-table message to said requesting entity in response to said detecting.

In an embodiment of the network device of the present invention, the requesting entity is an SNMP entity, said first request is a GetNextRequest-PDU, and said end-of-table message is a modified GetResponse-PDU.

In an embodiment of the network device of the present invention, said at least one managed entity comprises at least one network interface card.

In an embodiment, the network device of the present invention is adapted to provide the function of an access node.

The advantages of the various embodiments of the network device according to the present invention correspond, *mutatis mutandis,* to the above mentioned advantages of the method according to the present invention.

### Brief Description of the Figures

Some embodiments of apparatus and/or methods in accordance with embodiments of the present invention are now described, by way of example only, and with reference to the accompanying drawings, in which:
Figure 1 is a schematic view of MIB object retrieval according to the prior art;
Figure 2 is a schematic view of MIB object retrieval according to an embodiment of the invention;
Figure 3 represents a flow of messages according to the prior art;
Figure 4 represents a flow of messages according to an embodiment of the invention; and
Figure 5 represents a network device according to an embodiment of the present invention.

### Description of Embodiments

The known methods for traversing a table of a management information base are exemplified by the method described in RFC 1157, defining a simple network management protocol (SNMP). Section 4.1.3.1 of that RFC provides a detailed example of table traversal. In that example, an SNMP application entity extracts the destination address and NextHop gateway, for each entry in the routing table of a particular network element. The management station sends to the SNMP agent a GetNextRequest-PDU, containing the indicated object identifier values as the requested variable names:
*GetNextRequest (ipRouteDest, ipRouteNextHop, ipRouteMetric1)*
The SNMP agent responds with a GetResponse-PDU.

The GetNextRequest/GetResponse exchange is repeated several times until the object/value pairs returned by the SNMP agent no longer correspond to the requested object identifiers, but to those objects that are next in the MIB, according to the lexicographical ordering of the object names. This response signals the end of the routing table to the management station.

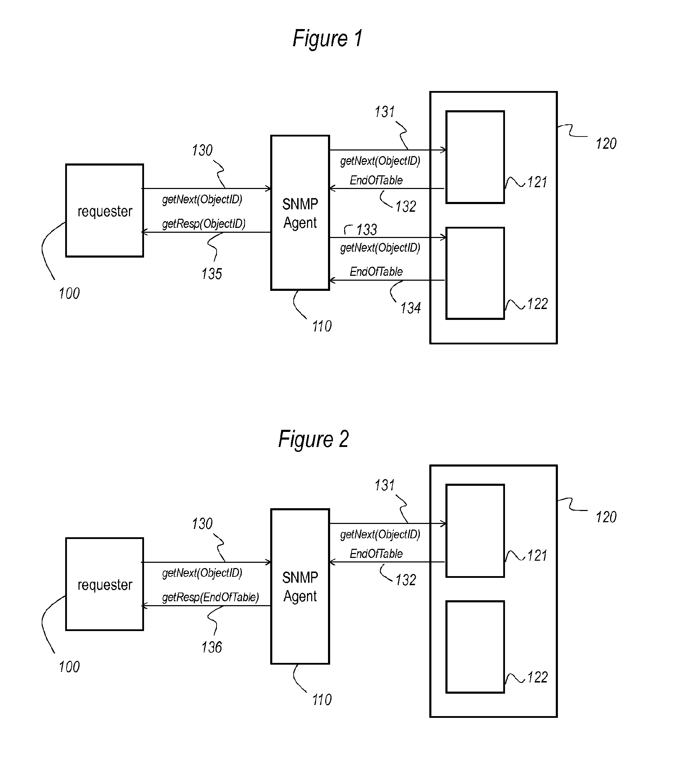

The known method is illustrated schematically in Figure 1. The management station of the example of RFC 1157 is shown in Figure 1 as requester **100.** The requester **100** may be a management protocol entity comprised in a software tool such as a MIB browser, a graphical device or network management tool, or a command line interface (CLI).

The requester **100** is operatively connected by means of a suitable protocol stack supporting the chosen management protocol, to a management agent **110** such as the SNMP agent of the above mentioned example. Without loss of generality, the message exchanges will be described in the context of the Simple Network Management Protocol (SNMP).

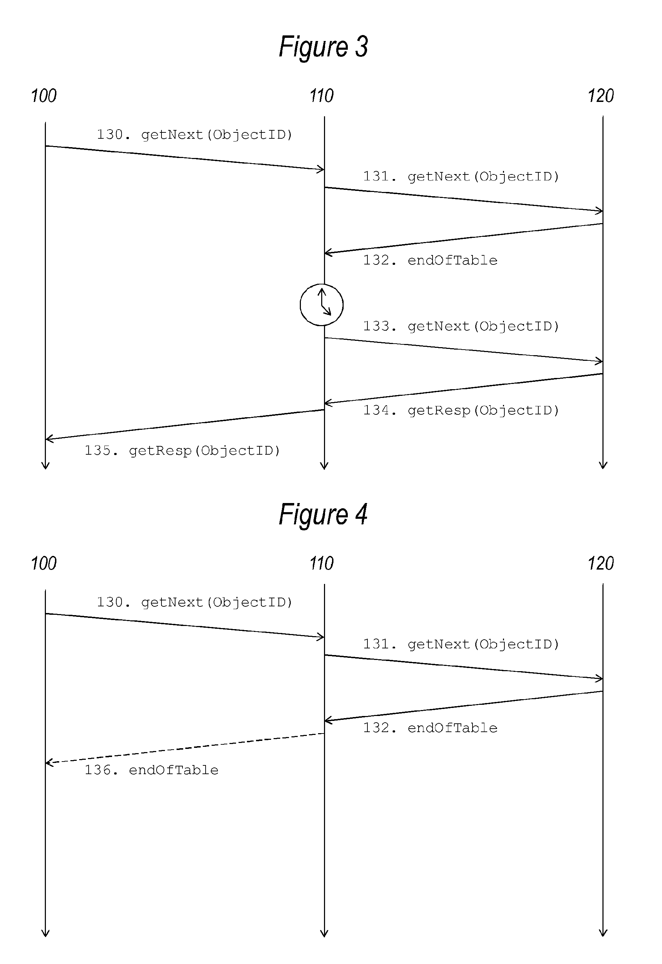

The SNMP agent **110** is in turn operatively connected to a managed device **120,** for example a network node such as an access node. The managed device **120** is shown in Figure 1 as containing multiple components or subsystems **121, 122,** each of which may have different management objects associated with it. Although only two subsystems **121, 122** are shown in Figure 1, this is done for clarity purposes only and without loss of generality. The sequence of message exchanges **130-135,** also shown in Figure 3, corresponds to the messages exchanged in the above cited example of RFC 1157. It should be noted however that RFC 1157 does not explicitly address the communication between SNMP agent **110** and managed device **120,** illustrated in Figure 1 as messages **131-134.** It is nevertheless instructive to take a closer look at these exchanges because they reveal a disadvantage which embodiments of the present invention overcome.

In the exchange of figure 1 we assume that the requester **100** has already received the last table element corresponding to the object identifier of interest from the SNMP agent **110.** Accordingly, upon receiving another GetNextRequest from the requester **100** in step **130,** the SNMP agent **110** will attempt to retrieve the next table element corresponding to the object identifier from the managed device **120** in step **131** by querying the concerned subsystem of the managed device **120.** Without loss of generality, we assume that the concerned subsystem is the first subsystem **121.** As a result of this query, SNMP agent **110** will be made aware in step **132** of the fact that the end of the table has already been reached.

The "end of table" situation may be detected by SNMP agent **110** by any of the means known to the person skilled in the art, such as the exchange of dedicated messages or signals between the first subsystem **121** and the SNMP agent **110,** or any interrupt, register value change, or communication producing the same effect.

In order to comply with the GetNextRequest **130,** received from requester **100,** the SNMP agent **110** will now determine the next object according to the lexicographic order, and address the concerned subsystem to retrieve the value of this object in step **133.** To clarify the object of the present invention, we will hereinafter assume, without loss of generality, that the concerned subsystem is the second subsystem **122.** The second subsystem **122** will return the requested object value in step **134,** allowing the SNMP agent **110** to transmit the appropriate response to the requester **100** in step **135.** Requester **100** will now detect that the received object does not pertain to the table of interest, and will conclude that the end of the table has been reached.

Components or subsystems **121** and **122** may be implemented on different hardware, for instance different interface cards present in the same network device. In the case of an access device, in particular an access device operating according to the TCP/IP protocol suite, one interface card may carry interfaces towards the subscriber lines (so-called line termination interfaces), while another interface card may carry interfaces towards the operator's network (so-called network termination interfaces). Accordingly, the management of these interface cards may be performed by different processors on the respective cards. Consecutively accessing a first managed object pertaining to the first subsystem **121,** and the second managed object pertaining to the second subsystem **122,** may involve a substantial delay due to the fact that the communication between the management agent **110** and the hardware responsible for managing the first subsystem **121** may have to be terminated, and communication between the management agent **110** and the hardware responsible for managing the second subsystem **122** may have to be set up. This delay may be unavoidable and relatively insignificant when the entire MIB of the managed device **120** is to be relayed from the management agent **110** to the requester **100,** but it is both undesirable and unjustified if the delay is simply due to a switch from the last object of a targeted table residing in the first subsystem **121** to its lexicographical successor residing in the second subsystem **122,** when the requester has not expressed an interest in obtaining the value of said successor.

Figure 2 illustrates an exchange of management messages according to an embodiment of the present invention. We again assume that requester **100** has already received the last element of a targeted table pertaining to the managed device **120,** in particular first subsystem **121.** As in Figure 1, requester **100** transmits a GetNextRequest pertaining to a given object identifier to SNMP agent **110** in step **130.** SNMP agent **110** attempts to retrieve the identified object from the first subsystem **121** in step **131.** As before, the first subsystem **121** indicates, by any of the known means, that the end of the relevant table has been reached in step **132.** At this point, the SNMP agent **110** according to the present invention transmits a dedicated end of table message **136** directly to requester **100,** thus avoiding the potential and unnecessary delay involved in contacting another subsystem **122** to retrieve the lexicographically next object, which, from the point of view of requester **100,** serves no other purpose than indicating the fact that the end of the table of interest has been reached.

Thus, the exchange according to the invention reduces the delay involved in table traversal, and avoids the unnecessary transmission of management objects in which the requester **100** is not interested.

Figure 3 provides a schematic flowchart of the message exchanges between requester **100,** management agent **110** and managed device **120,** in accordance with the method of the prior art. The same reference numerals are used to designate the same steps as those described in connection with Figures 1 and 2. Accordingly, it will be clear that the exchanges represented by solid arrows correspond to the protocol exchange according to the prior art, wherein the requester **100** sends a GetNextRequest **130** to the SNMP agent **110,** which, as a result, attempts to retrieve the next object from the managed device **120** in step **131,** and subsequently detects that the end of the table has been reached in step **132.** The SNMP agent **110** will then attempt to retrieve the next object in the lexicographic order from managed device **120** in step **133,** which may incur a substantial delay if this next object is in fact associated with a second subsystem, different from the first subsystem in which the table of interest resides. The SNMP agent **110** will receive the next object in step **134,** allowing it to relay the object value to the requester **100** in step **135.**

Figure 4 provides a schematic flowchart of the message exchanges between requester **100,** management agent **110** and managed device **120,** in accordance with an embodiment of the present invention. The same reference numerals are used to designate the same steps as those described in connection with Figures 1, 2, and 3. The improvement of the present invention is represented by the dashed arrow, designated as step **136,** in which a dedicated end of table message is transmitted directly from the SNMP agent **110** to requester **100,** thus avoiding the need to incur additional delay by attempting to retrieve the next object in the lexicographic order, which may reside in another subsystem of the managed device **120.**

Hence, according to the invention, steps **133, 134** and **135** don't have to take place. Experiments have shown that implementations of the present invention, applied to certain types of access nodes, are able to reduce the time required to retrieve certain tables by several seconds. However, according to a variant of the invention, step **136,** in which a dedicated end of table message is transmitted directly from the SNMP agent **110** to requester **100,** may be combined with the conventional steps **133, 134** and **135.** This allows applications attempting to retrieve large portions of the MIB across table boundaries, and applications attempting to retrieve just one table, to both function optimally with the same SNMP agent.

In another variant of the invention, the GetNextRequest message transmitted by the requester **100** is modified to indicate to the SNMP agent **110** that an explicit end-of-table message **136** is requested when an end-of-table situation occurs.

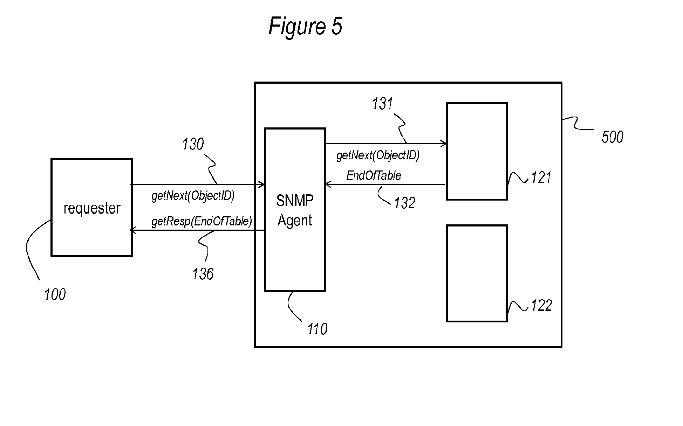

In the above embodiments of the present invention, the SNMP agent **110** and the managed device **120** have been mentioned, without limitation, as independently acting entities. Figure 5 illustrates a network device **500** according to an embodiment of the present invention, comprising a functional managed device **120** and an integrated management agent **110,** preferably an SNMP agent. The network device **500** according to the invention is adapted to operate according to the principles explained in connection with Figures 2 and 4. In particular, it is adapted to transmit a dedicated "end of table" message to the requester **100.** The network device **500** may *inter alia* be an access node, a switch, a router, a server, or the like. The term "access node" includes without limitation a digital subscriber line access multiplexer (DSLAM). The network device **500** may comprise a plurality of subsystems **121, 122,** which, in the case of an access node, may correspond to one or more line termination cards and/or one or more network termination cards.

The dedicated "end of table" message generated by embodiments of the present invention is preferably a modified form of a standardized message according to a known management protocol. Most preferably, it is an SNMP message substantially corresponding to the GetResponse-PDU, in which a newly defined value of an existing flag, such as the "ErrorStatus" flag, or a new flag is used to signal the "end of table" condition to the recipient.

Although embodiments of the present invention have been described in connection with the simple network management protocol SNMP as defined for the TCP/IP protocol suite, it shall be clear to the skilled person that the invention is not limited thereto, and that the same principles may be applied to other management protocols that experience the same underlying disadvantages.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for using a management information base containing management objects with a predetermined order, the method comprising:
- receiving at a management agent a first request from a requesting entity to retrieve a next management object according to said predetermined order;
- sending a second request pertaining to said next management object from said management agent to a managed entity;
- detecting an end-of-table condition at said management agent; and
- sending a first end-of-table message from said management agent to said requesting entity.

2. The method of claim 1, wherein said detecting of said end-of-table condition comprises receiving a second end-of-table message from said managed entity.

3. The method of any of the preceding claims, wherein the requesting entity is an SNMP entity, said first request is a GetNextRequest-PDU, and said first end-of-table message is a modified GetResponse-PDU.

4. The method of any of the preceding claims, wherein said managed entity is comprised in an access node.

5. The method of any of the preceding claims, wherein said management entity interfaces with a user via a user interface.

6. The method of claim 5 wherein the user interface comprises a graphical MIB browser.

7. The method of claim 5, wherein the user interface comprises a command line interface.

8. A network device comprising a management agent and at least one managed entity operatively connected to said management agent, the network device being in communication with a requesting entity, wherein the management agent is adapted to receive a first request from the requesting entity to retrieve a next management object relative to a reference object pertaining to said managed entity and to detect an end-of-table condition with respect to said reference object, and wherein the management agent is further adapted to send an end-of-table message to said requesting entity in response to said detecting.

9. The network device of claim 8, wherein the requesting entity is an SNMP entity, said first request is a GetNextRequest-PDU, and said end-of-table message is a modified GetResponse-PDU.

10. The network device of claim 8 or claim 9, wherein said at least one managed entity comprises at least one network interface card.

11. The network device of claim 10, adapted to provide the function of an access node.
